# EUROPEAN PATENT APPLICATION

(11) **EP 4 718 231 A1**
(43) Date of publication of application: **01.04.2026**
(21) Application number: 25202271.0
(22) Date of filing: 15.09.2025
(51) Int. Cl.: G06F 3/12, B65H 31/24, G03G 15/00

(54) **IMAGE FORMING APPARATUS, METHOD FOR CONTROLLING THE SAME, AND PROGRAM**

(30) Priority: 24.09.2024 JP 2024164861
(71) Applicant: Canon Kabushiki Kaisha, Tokyo, 146-8501 (JP)
(72) Inventor: IMAI, Seijiro, Tokyo, 146-8501 (JP); MUTSUNO, Masahiro, Tokyo, 146-8501 (JP); OKADA, Takeshi, Tokyo, 146-8501 (JP)
(74) Representative: Canon Europe Limited

(57) **Abstract**

An image forming apparatus includes a printing unit, a plurality of discharge trays including a first discharge tray, a second discharge tray, and a third discharge tray, the plurality of discharge trays being subjected to discharge of a sheet with an image printed thereon by the printing unit, an accepting unit configured to accept a specified number of sheets by a user. A switching unit does not switch a discharge destination tray to the first discharge tray having a number of dischargeable sheets that is less than the specified number of sheets among the plurality of discharge trays, and switches the discharge destination tray to which the sheet is discharged for each specified number of sheets among the second discharge tray and the third discharge tray having a dischargeable number of sheets that is larger than or equal to the specified number of sheets among the plurality of discharge trays.

## Description

### Technical Field

The present disclosure relates to an image forming apparatus, a method for controlling the image forming apparatus, and a program.

### BACKGROUND

In some cases of commercial printing, a user packs print products in units of a predetermined number of sheets before sending the print products. In packing such print products, sheets are desirably discharged to a discharge tray in a state where the print products are sorted in bundles for each number of sheets to be packed.

For the function of sorting sheets in units for each number of sheets desired by a user, a shift function is used (Japanese Patent Laid-Open No. 2007-175990). The shift function discharges sheets to a discharge tray in a state where sheets are shifted in units for each number of sheets specified by the user, to thereby sort sheets in units for each number of sheets desired by the user.

### SUMMARY

For example, when using a paper type not supporting a shift function or when using a discharge apparatus not supporting the shift function, sheets need to be sorted with other methods. For example, when using a discharge apparatus having a plurality of discharge trays, the discharge tray to which sheets are discharged can be changed for every unit specified by a user.

However, each discharge tray has an upper limit of the stackable number of sheets. Thus, when the number of sheets specified by the user exceeds the stackable number of sheets, the discharge destination tray is changed to another discharge tray at a time when the discharged number of sheets on the tray reaches the upper limit of stackable number of sheets. Then, sheets of the number as the difference between the number of sheets specified by the user and the upper limit of the stackable number of sheets is discharged to another discharge tray. In this case, the user needs to take time and effort to collect the bundles of sheets discharged to a plurality of discharge trays into one bundle.

The present disclosure has been embodied in view of the above-described issue, and is directed to preventing a bundle of user-specified sheets from being discharged separately to a plurality of discharge trays by a discharge tray switching function for the specified sheet number.

The present disclosure in its first aspect provides an image forming apparatus as specified in claim 1. Optional features are specified in claims 2 to 8. The present disclosure in its second aspect provides a method for controlling the image forming apparatus as specified in claim 9. The present disclosure in its third aspect provides a storage medium as specified in claim 10.

Features of the present disclosure will become apparent from the following description of embodiments with reference to the attached drawings. The following description of embodiments is described by way of example.

### BRIEF DESCRIPTION OF THE DRAWINGS

Fig. 1 illustrates an example of a hardware configuration of a printing system.
Fig. 2 illustrates an example of a system configuration of the printing system.
Fig. 3 illustrates an example of a setting screen for a discharge tray switching function.
Fig. 4 is a flowchart illustrating an example of processing in which an image forming apparatus accepts settings of the discharge tray switching function for a specified number of sheets.
Fig. 5 is a flowchart illustrating an example of processing in which the image forming apparatus executes a print job in a state where the discharge tray switching function for the specified number of sheets is enabled.
Fig. 6 illustrates an example of a setting screen for an interleave insertion function.
Fig. 7 illustrates an example of a discharge destination tray setting screen.
Fig. 8 is a flowchart illustrating an example of processing in which the image forming apparatus executes a print job.
Fig. 9 illustrates an example of a discharge setting screen for a printer driver installed in a personal computer (PC).
Fig. 10 illustrates an example of a setting screen for the discharge tray switching function by the specified number of sheets.

### DESCRIPTION OF THE EMBODIMENTS

Embodiments of the present disclosure will be described below with reference to the accompanying drawings. The following embodiments do not limit the present disclosure within the scope of the appended claims. Although a plurality of features is described in the embodiments, not all of the plurality of features is indispensable to the present disclosure, and the plurality of features may be optionally combined. In the accompanying drawings, identical or similar components are assigned the same reference numerals, and duplicated descriptions thereof will be omitted. The plurality of embodiments described below may be combined. Each of the embodiments of the present invention described below can be implemented solely or as a combination of a plurality of the embodiments or features thereof where necessary or where the combination of embodiments or features of embodiments is beneficial.

In the following descriptions, an external controller may also be referred to as an image processing controller, digital front end (DFE), or print server. The image forming apparatus may be called a Multifunction Peripheral (MFP).

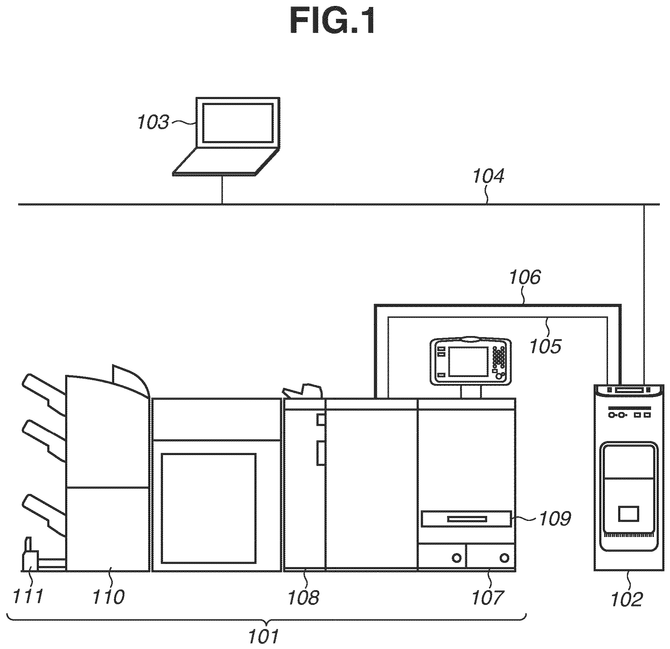

Fig. 1 illustrates an example of a hardware configuration of a printing system. An image processing system includes an image forming apparatus 101 and an external controller 102. The image forming apparatus 101 and the external controller 102 are communicably connected with each other via an internal local area network (LAN) 105 and a video cable 106. The external controller 102 is communicably connected with a client personal computer (PC) 103 via the external LAN 104, and a print instruction is issued from the PC 103 to the external controller 102.

The client PC 103 is installed with a printer driver having a function of converting print data into a print description language processable by the external controller 102. A user who will perform printing can issue a print instruction from various applications via the printer driver. The printer driver transmits print data to the external controller 102 based on the print instruction from the user. Upon reception of the print instruction from the PC 103, the external controller 102 subjects the print data to data analysis and rasterization processing and then inputs the print data to issue a print instruction to the image forming apparatus 101.

The image forming apparatus 101 will now be described. The image forming apparatus 101 is connected with an apparatus having a plurality of different functions and is configured to perform complicated print processing such as bookbinding. The image forming apparatus 101 can also have a plurality of different functions via one apparatus.

A printing apparatus 107 serving as a printing unit forms an image on the sheet conveyed from the sheet feeding unit at a lower portion of the printing apparatus 107, by using a toner. The configuration and operating principle of the printing apparatus 107 are as follows. The printing apparatus 107 irradiates a photosensitive drum with a laser beam modulated in accordance with image data, as scanning light, reflected by a rotating polygon mirror. An electrostatic latent image formed on the photosensitive drum by the laser beam is developed by a toner. The generated toner image is transferred onto a sheet stuck on a transfer drum. The toner remaining on the photosensitive drum after toner image transfer is scratched by a cleaning blade and then conveyed to a waste toner container. The printing apparatus 107 performs this series of image forming processes for yellow (Y), magenta (M), cyan (C), and black (K) toners in this order to form a full color image on the sheet. The sheet with the full color image formed thereon on the transfer drum is conveyed to a fixing unit. The fixing unit includes a roller, a belt, and the like, and the roller includes a heat source such as a halogen heater. The fixing unit melts the toner on the sheet on which the toner image is transferred, with heat and pressure, to fix the toner image to the sheet.

A storage slot 109 is a waste toner container storage slot provided on the printing apparatus 107.

The printing apparatus 107 includes two different waste toner containers. When a waste toner container becomes full, the user can replace the waste toner container by opening and closing this storage slot.

An inserter 108 is used to insert an insertion sheet. The inserter 108 can insert a sheet at any position in a group of sheets printed and conveyed by the printing apparatus 107.

A large-capacity stacker 110 is capable of stacking a large number of sheets. A finisher 111 applies finishing processing (post-processing) to the conveyed sheets. More specifically, the finisher 111 applies finishing processing such as stapling, punching, and saddle stitching binding to the sheets.

The finisher 111 includes three different discharge trays. With a print job including a setting of tray switching with a specified number of sheets, the finisher 111 performs control to sequentially switch between the three discharge trays as the charge destination tray. The number of discharge trays is not limited to three, and two, four, or more discharge trays can be provided.

A sheet with an image printed thereon by the printing apparatus 107 is discharged to these discharge trays. The sheet may or may not be subjected to post-processing before being discharged.

More specifically, the image forming apparatus 101 includes a plurality of discharge trays including a first discharge tray, a second discharge tray, and a third discharge tray. The plurality of discharge trays is subjected to discharge of sheets with an image printed thereon by the printing unit (each of the plurality of discharge trays is configured to receive sheets discharged from the printing unit, the sheets having an image printed thereon by the printing unit).

Although the external controller 102 is connected with the image forming apparatus 101 in the printing system illustrated in Fig. 1, the present embodiment is not limited to the configuration where the external controller 102 is connected.

More specifically, the image forming apparatus 101 can also be connected with the external LAN 104, and the client PC 103 can transmit print data processable by the image forming apparatus 101. In this case, the image forming apparatus 101 performs data analysis and rasterization processing before performing print processing.

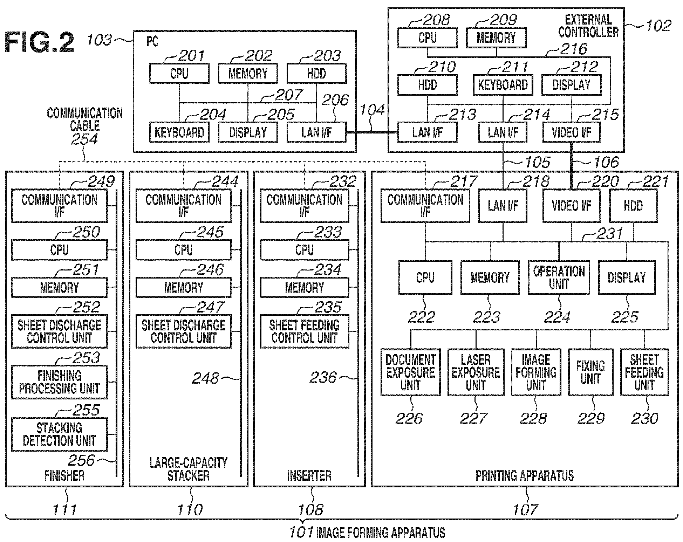

Fig. 2 illustrates an example of a system configuration of the printing system.

The configuration of the printing apparatus 107 of the image forming apparatus 101 will be described. The printing apparatus 107 of the image forming apparatus 101 includes a communication interface (I/F) 217, a LAN I/F 218, a video I/F 220, a hard disk drive (HDD) 221, a central processing unit (CPU) 222, a memory 223, an operation unit 224, and a display 225. The printing apparatus 107 of the image forming apparatus 101 also includes a document exposure unit 226, a laser exposure unit 227, an image forming unit 228, a fixing unit 229, and a sheet feeding unit 230. These components are connected with each other via a system bus 231.

The communication I/F 217 is connected with the inserter 108, the large-capacity stacker 110, and the finisher 111 via a communication cable 254, and performs communication to control these apparatuses.

The LAN I/F 218 is connected with the external controller 102 via the internal LAN 105 to communicate print data.

The video I/F 220 is connected with the external controller 102 via the video cable 106 to communicate image data and the like.

The HDD 221 is a storage device for storing programs and data. The CPU 222 comprehensively controls image processing and printing based on the programs stored in the HDD 221. The memory 223 stores programs and image data needed for the CPU 222 to execute various processing, and operates as a work area. The operation unit 224 accepts various setting inputs and operating instructions from the user. The display 225 displays setting information for an image processing apparatus and a print job processing status. The document exposure unit 226 performs processing for reading a document when the copy or scanning function is used. The document exposure unit 226 reads document data by capturing an image of the document by using a charge coupled device (CCD) camera while irradiating a sheet placed by the user with light of an exposure lamp.

The laser exposure unit 227 performs primary charge and laser exposure to irradiate the photosensitive drum with a laser beam to transfer a toner image. Firstly, the laser exposure unit 227 performs primary charge to charge the surface of the photosensitive drum to a uniform negative potential. Then, the laser exposure unit 227 irradiates the photosensitive drum with a laser beam via a laser driver while adjusting the reflection angle by using the polygon mirror. Thus, negative charges on the irradiated portions are neutralized, and an electrostatic latent image is formed. The image forming unit 228 transfers toner on the photosensitive drum to the sheet. The image forming unit 228 includes a developing unit, a transfer unit, and a toner supply unit. The developing unit applies the negatively charged toner from a developing cylinder to the electrostatic latent image on the surface of the photosensitive drum to visualize the image. The transfer unit performs primary transfer to apply a positive potential to a primary transfer roller to transfer the toner on the surface of the photosensitive drum to a transfer belt, and performs secondary transfer to apply a positive potential to a secondary transfer roller to transfer the toner on the transfer belt to the sheet.

The fixing unit 229 melts and fixes the toner on the sheet with heat and pressure. The fixing unit 229 includes a heater, a fixing belt, and a pressure belt. The sheet feeding unit 230 supplies a sheet and controls the sheet feed and conveyance operations by using rollers and various sensors.

The configuration of the inserter 108 of the image forming apparatus 101 will now be described. The inserter 108 of the image forming apparatus 101 includes a communication I/F 232, a CPU 233, a memory 234, and a sheet feeding control unit 235 that are connected with each other via a system bus 236. The communication I/F 232 connected with the printing apparatus 107 via the communication cable 254 performs communication necessary for control operations. The CPU 233 performs various control operations necessary for sheet feeding according to a control program stored in the memory 234. The memory 234 is a storage device storing control programs. The sheet feeding control unit 235 controls the feeding and conveyance of the sheet conveyed from the sheet feeding portion of the inserter 108 or the printing apparatus 107 while controlling the rollers and sensors based on instructions from the CPU 233.

The configuration of the large-capacity stacker 110 of the image forming apparatus 101 will now be described. The large-capacity stacker 110 of the image forming apparatus 101 includes a communication I/F 244, a CPU 245, a memory 246, and a discharge control unit 247 that are connected via a system bus 248. The communication I/F 244 connected with the printing apparatus 107 via the communication cable 254 performs communication necessary for control operations. The CPU 245 performs various control operations necessary for sheet discharge according to a control program stored in the memory 246. The memory 239 is a storage device storing control programs. The sheet discharge control unit 247 performs control operations for conveying the conveyed sheet to a stack tray, an escape tray, or the following finisher 111 based on instructions from the CPU 245.

The configuration of the finisher 111 of the image forming apparatus 101 will now be described. The finisher 111 of the image forming apparatus 101 includes a communication I/F 249, a CPU 250, a memory 251, a sheet discharge control unit 252, and a finishing processing unit 253 that are connected with each other via a system bus 256. The communication I/F 249 is connected with the printing apparatus 107 via the communication cable 254 to perform communication necessary for control operations. The CPU 250 performs various control operations necessary for finishing and sheet discharge according to a control program stored in the memory 251. The memory 251 is a storage device storing control programs. The sheet discharge control unit 252 controls the sheet conveyance and discharge operations based on instructions from the CPU 250. The finishing processing unit 253 controls finishing processing such as stapling, punching, and saddle stitching binding based on instructions from the CPU 250. A stacking detection unit 255 detects whether each tray of the finisher 111 is loaded with paper.

The configuration of the external controller 102 will now be described. The external controller 102 includes a CPU 208, a memory 209, an HDD 210, a keyboard 211, a display 212, LAN I/Fs 213 and 214, and a video I/F 215 that are connected via a system bus 216. The CPU 208 comprehensively performs processing for receiving print data from the client PC 103, raster image processing (RIP), and processing for transmitting a print job to the image forming apparatus 101 based on programs and data stored in the HDD 210. The memory 209 stores programs and data necessary for the CPU 208 to execute various processing and operates as a work area. The HDD 210 stores the programs and data necessary for print processing. The keyboard 211 inputs operating instructions of the external controller 102. The display 212 displays information about an application executed by the external controller 102, by using video signals of still or moving images. The LAN I/F 213 is connected with the client PC 103 via the external LAN 104 to communicate print instructions and the like.

The LAN I/F 214 is connected with the image forming apparatus 101 via the internal LAN 105 to communicate print instructions and the like. The video I/F 215 is connected with the image forming apparatus 101 via the video cable 106 to communicate image data.

The configuration of the client PC 103 will now be described. The client PC 103 includes a CPU 201, a memory 202, an HDD 203, a keyboard 204, a display 205, and a LAN I/F 206 that are connected with each other via a system bus 207. The CPU 201 generates print data and issues print instructions based on a document processing program and the like stored in the HDD 203. The CPU 201 also comprehensively controls the devices connected to the system bus 207. The memory 202 stores programs and data necessary for the CPU 201 to execute various processing and operates as a work area. The HDD 203 stores programs and data necessary for operations such as print processing. The keyboard 204 inputs operating instructions for the client PC 103. The display 205 displays information about an application or the like executed by the client PC 103, by using video signals of still and moving images. The LAN I/F 206 is connected with the external LAN 104 to communicate print instructions and the like.

In the above descriptions, the external controller 102 and the image forming apparatus 101 are connected via the internal LAN 105 and the video cable 106, but these two apparatuses only need to be configured to transmit and receive data necessary for printing. For example, these apparatuses can be connected only with the video cable 106. The memories 202, 209, 223, 234, 239, 246, and 251 need to be storage devices for storing data and programs. For example, these memories can be substituted by volatile random access memories (RAMs), nonvolatile read only memories (ROMs), built-in HDDs, external HDDs, or universal serial bus (USB) memories.

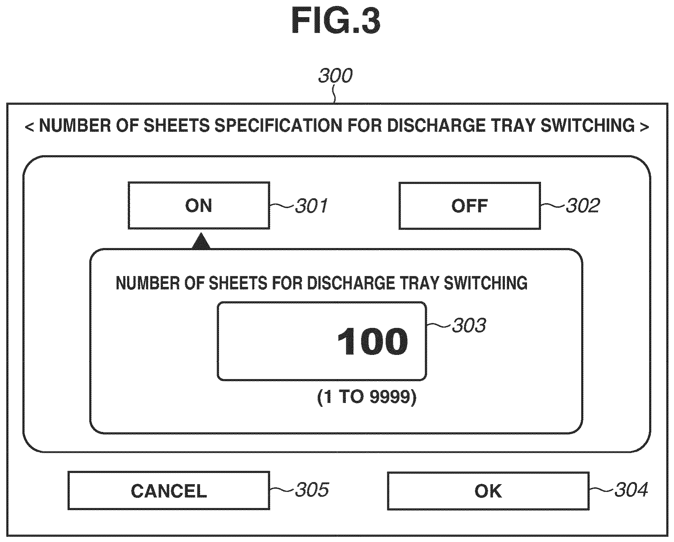

Fig. 3 illustrates an example of a setting screen for the discharge tray switching function by the specified number of sheets. A setting screen 300 is displayed on the display 225. The user makes setting for the discharge tray switching function by the specified number of sheets from the setting screen 300. When the user presses an ON button 301, the function is enabled. When the user presses an OFF button 302, the function is disabled. When the ON button 301 is pressed, a box 303 for accepting an input of the specified number of sheets appears to allow the user to specify the number of sheets. More specifically, the image forming apparatus 101 includes an accepting unit for accepting a specified number of sheets by the user. The box 303 displays the number of sheets input by the user via the operation unit 224. The user is allowed to specify the number of sheets with a number from 1 to 9999.

Referring to the example in Fig. 3, the user specifies 100 sheets. During execution of one print job, when the printing apparatus 107 has discharged 100 sheets to the discharge tray of the finisher 111, the printing apparatus 107 changes the discharge destination tray to another discharge tray. In other words, the image forming apparatus 101 can change the discharge destination tray each time the specified number of sheets has been discharged.

When the user presses an OK button 304, settings in the setting screen 300 are reflected to the print job. When the user presses a cancel button 305, the CPU 222 closes the setting screen 300 and cancels the setting processing.

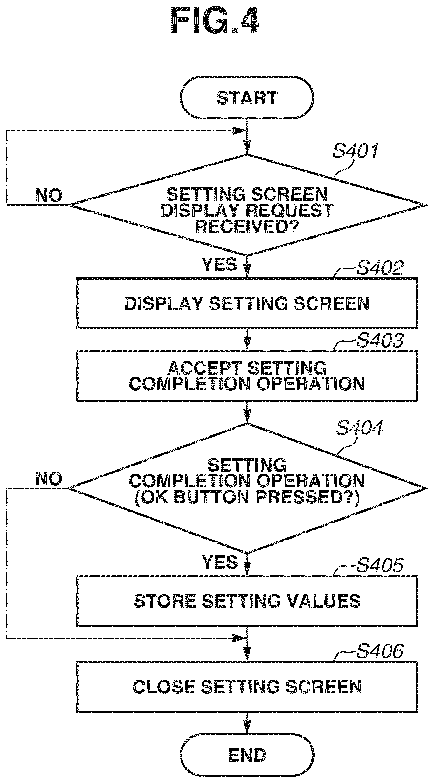

Fig. 4 is a flowchart illustrating processing in which the image forming apparatus 101 accepts the settings of the discharge tray switching function by the specified number of sheets. The processing in Fig. 4 is executed by the CPU 222 of the printing apparatus 107.

In step S401, the CPU 222 waits for the reception of a setting screen display request from the user. When the CPU 222 receives the setting screen display request (YES in step S401), the processing proceeds to step S402. In step S402, the CPU 222 displays the setting screen 300 on the display 225. In step S403, the CPU 222 accepts a setting completion operation performed by the user via the operation unit 224. More specifically, the CPU 222 accepts a setting cancel instruction by the cancel button 305 or a setting reflection instruction by the OK button 304. In step S404, the CPU 222 determines which of the setting cancel instruction and the setting reflection instruction is accepted as the setting completion operation accepted in step S403. In a case where the OK button 304 is pressed (YES in step S404), the processing proceeds to step S405. In step S405, the CPU 222 stores the setting values in the HDD 221. In contrast, in a case where the cancel button 305 is pressed (NO in step S404), the CPU 222 cancels the setting values without storing the setting values in the HDD 221. When the setting operation is completed, the processing proceeds to step S406. In step S406, the CPU 222 closes the setting screen 300.

### <First Embodiment>

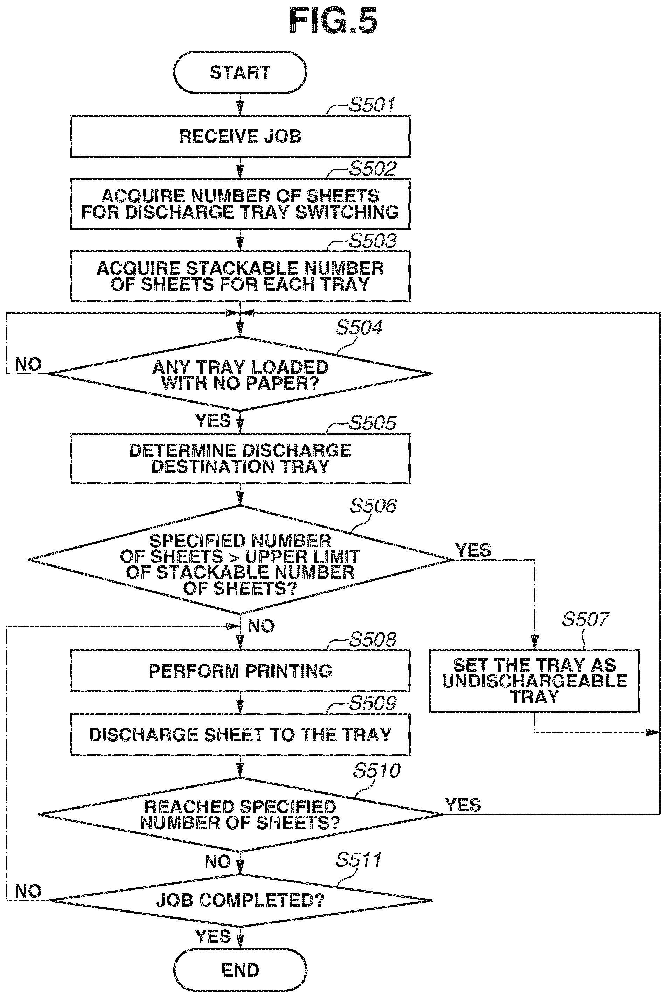

Fig. 5 is a flowchart illustrating an example of processing in which the image forming apparatus 101 executes a print job in a state where the discharge tray switching function setting by the specified number of sheets is enabled. The processing in Fig. 5 is executed by the CPU 222 of the printing apparatus 107.

In step S501, the printing apparatus 107 receives a print job from the external controller 102. In step S502, the CPU 222 accesses the HDD 221 to acquire the number of sheets for discharge tray switching set by the user. In step S503, the CPU 222 acquires the stackable number of sheets for each discharge tray of the finisher 111 from the HDD 221. According to the present embodiment, the HDD 221 of the printing apparatus 107 stores the stackable number of sheets for each discharge tray. However, to perform more accurate stacking control, the HDD 221 can store the upper limit of the stackable height for each tray, and the stackable number of sheets according to the paper type to be used for the print job can be calculated. The stackable number of sheets refers to the number of sheets that can be discharged without removing discharged sheets. The stackable number of sheets refers to the number of sheets set as an upper limit value stored in the HDD 221. The stackable number of sheets also refers to the upper limit of the number of sheets for preventing the next sheet from being discharged to the relevant tray unless sheets are removed after the stackable number of sheets has been discharged.

In step S504, the CPU 222 determines whether any tray is loaded with no paper based on the detection result by the stacking detection unit 255 of the finisher 111. In a case where there is no such a tray (NO in step S504), the processing repeats step S504, and the CPU 222 waits until the user removes sheets to enable subsequent sheet discharge to the relevant tray. According to the present embodiment, the CPU 222 performs an operation to stop printing until a dischargeable tray is found. In a case where there is no dischargeable tray, the CPU 222 can also cancel the print job. In a case where a dischargeable tray is found (YES in step S504), the processing proceeds to step S505. In step S505, the CPU 222 determines the tray as a discharge destination tray.

In step S506, the CPU 222 compares the number of sheets for discharge tray switching acquired in step S502 with the stackable number of sheets of the relevant tray determined as a discharge destination tray in step S505. In a case where the number of sheets for discharge tray switching exceeds the stackable number of sheets (YES in step S506), the processing proceeds to step S507. In step S507, the CPU 222 sets the relevant tray as an undischargeable tray (i.e., a tray to which a sheet may not be discharged) and stores the setting in the memory 223. Thereafter, the processing returns to step S504. In step S504, the CPU 222 changes the discharge destination tray to a tray other than the discharge tray determined as an undischargeable tray in step S507. More specifically, the CPU 222 does not select the first discharge tray having a dischargeable number of sheets less than the specified number of sheets, out of the plurality of discharge trays. Then, the CPU 222 can change the discharge destination tray to the second or the third discharge tray having a dischargeable number of sheets equal to or larger than the specified number of sheets, out of the plurality of discharge trays, each time the specified number of sheets has been discharged.

In a case where the number of sheets for discharge tray switching is less than or equal to the stackable number of sheets of the relevant tray (NO in step S506), the processing proceeds to step S508. In step S508, the CPU 222 executes the print processing. In step S509, the CPU 222 discharges a sheet to the discharge tray determined in step S505. In step S510, the CPU 222 checks whether the number of sheets having been discharged to the relevant tray has reached the number of sheets for discharge tray switching. In a case where the number of sheets having been discharged has reached the number of sheets for discharge tray switching (YES in step S510), the processing returns to step S504. In step S504, the CPU 222 changes the discharge destination tray to another tray. In a case where the number of sheets having been discharged has not reached the number of sheets for discharge tray switching (NO in step S510), the processing proceeds to step S511. In step S511, the CPU 222 checks whether the print job is completed. In a case where the print job is not completed (NO in step S511), the processing returns to step S508. In step S508, the CPU 222 continues the print processing. In a case where the print job is completed (YES in step S511), the CPU 222 ends the processing.

According to the present embodiment, the CPU 222 executes processing for not discharging sheets to a tray having the upper limit of the dischargeable number of sheets less than the number of sheets for discharge tray switching. However, the method for implementing this processing is not limited thereto.

### <Second Embodiment>

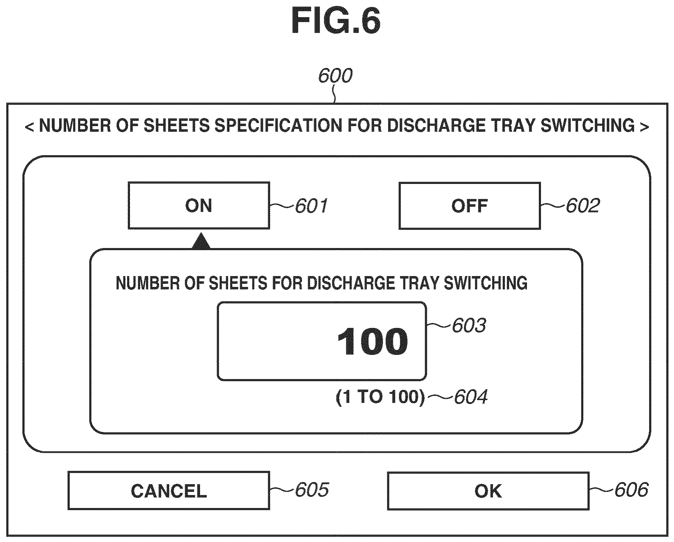

Fig. 6 illustrates an example of a setting screen for the discharge tray switching function. A setting screen 600 is displayed on the display 225. Referring to the setting screen 600, parts 601 to 606 are equivalent to the counterparts in Fig. 3 except for a value 604.

The value 604 represents the value area of the number of sheets for discharge tray switching that can be set by the user. Values other than the value 604 cannot be input by the user. The CPU 222 acquires an upper limit of the dischargeable number of sheets for each discharge tray of the finisher 111 from the HDD 221, and sets the minimum value as the maximum value of the range of the value 604. For example, In a case where the upper limit of the dischargeable number of sheets of the three different discharge trays of the finisher 111 are 100, 150, and 200, respectively, the CPU 222 determines the minimum value (100) as the upper limit of the number of sheets for discharge tray switching, and displays 1 to 100 as the range of the value 604. This prevents the user from inputting or specifying a value exceeding 100. After accepting an input and when the input value is out of the range, the CPU 222 can display an error message and then cancel the setting.

This control enables preventing the user from specifying the number of sheets for discharge tray switching exceeding the upper limit of the dischargeable number of sheets for each discharge tray. More specifically, this control enables preventing bundles of print products desired by the user from being discharged to a plurality of trays.

### <Third Embodiment>

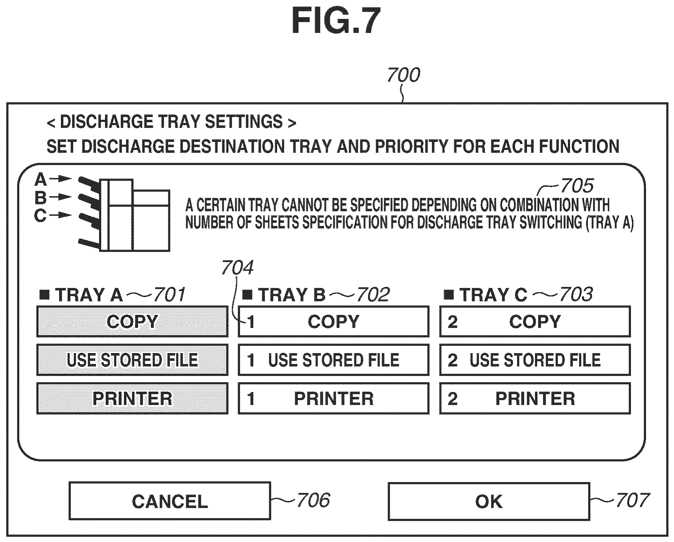

Fig. 7 illustrates an example of a discharge tray setting screen according to a different embodiment. A setting screen 700 is displayed on the display 225. The user sets the discharge destination tray from the setting screen 700 before inputting a print job. The setting screen 700 allows the user to set the discharge destination tray and the sheet discharge priority for each of the functions (copy function, function of using a stored file, and print function). This case is an example where the number of sheets for discharge tray switching input in the screen 300 by the user exceeds the upper limit of the dischargeable number of sheets of the tray A. The function of using a stored file is a function of printing an image on paper based on image data (file) selected by the user from the image data stored in the HDD 221.

Setting items 701 to 703 are priority setting items of different functions for each tray and are used to accept user settings for each tray. The number at a region 704 indicates the priority set by the user. Referring to the example in Fig. 7, the sheet discharge priority (priority order) for each function is set in order of the trays B and C. For example, when a print job for outputting 200 sheets is executed, and the specified number of sheets is set to 100, the first half 100 sheets are discharged to the tray B, and the last half 100 sheets are discharged to the tray C.

In contrast, the buttons of the setting item 701 for the tray A are displayed in a gray-out state, preventing the user from selecting the tray A as a discharge destination tray. A message 705 also appears to indicate that the tray A cannot be specified as a discharge destination tray because of the combination with the specified number of sheets for discharge tray switching. Upon completion of settings, the user presses a cancel button 706 or an OK button 707 to cancel or store the setting values, respectively.

When displaying the screen 700, the CPU 222 acquires the upper limit of the dischargeable number of sheets and the number of sheets for discharge tray switching for each discharge tray from the HDD 221. In this case, since the upper limit of the dischargeable number of sheets is less than the number of sheets for discharge tray switching only for the tray A, the CPU 222 displays the buttons of the setting item 701 for the tray A in a gray-out state, preventing the user from setting the discharge destination tray.

More specifically, the image forming apparatus 101 can display a screen for accepting the selection of the discharge tray. The CPU 222 can also change the discharge destination tray each time the number of sheets specified for the discharge tray selected in the screen is discharged. In the screen, the CPU 222 also prevents the user from selecting the first discharge tray having the dischargeable number of sheets less than the specified number of sheets. The user is allowed to select a discharge tray having the dischargeable number of sheets less than the specified number of sheets. However, the CPU 222 can also display an error message to prevent the user from selecting the relevant tray.

The image forming apparatus 101 can display information indicating that a discharge tray having the dischargeable number of sheets less than the specified number of sheets cannot be selected, on a screen that is the same screen for accepting a discharge tray selection. The relevant information is a message such as "Cannot discharge sheets to the tray having the upper limit of the dischargeable number of sheets less than the specified number of sheets". The image forming apparatus 101 can accept the priority settings of the discharge trays and change the discharge tray based on the priorities. The priority is then set for each executable function of the image forming apparatus 101.

This control enables preventing a tray having the upper limit of the dischargeable number of sheets less than the number of sheets for discharge tray switching, from being set as a discharge destination tray. More specifically, this control enables preventing bundles of print products desired by the user from being discharged to a plurality of trays.

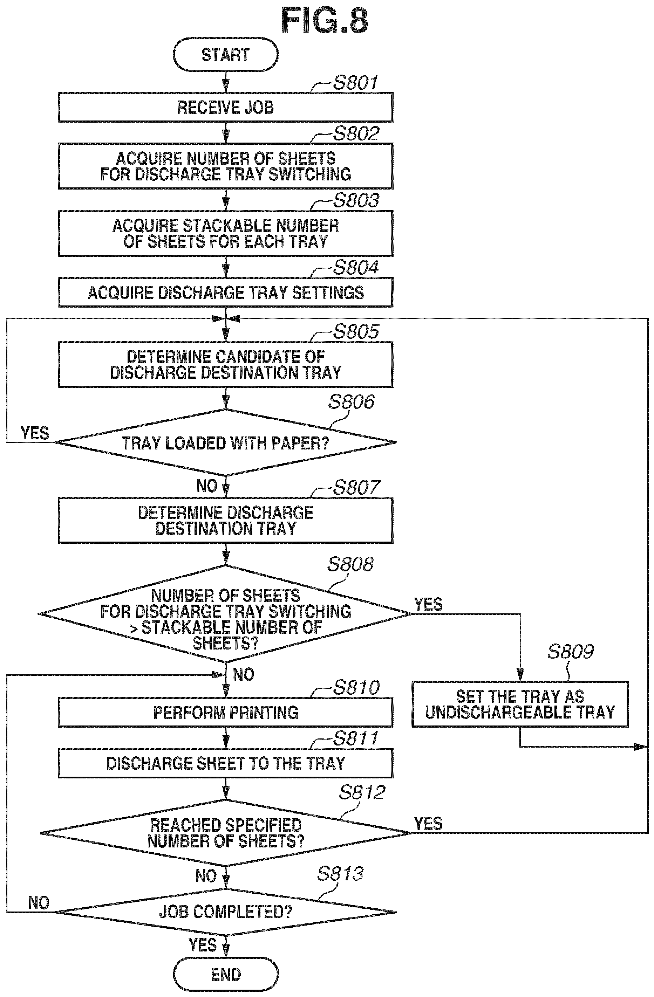

Fig. 8 is a flowchart illustrating processing according to an embodiment in which the discharge destination tray is set from the screen 700 in Fig. 7. In the processing, the image forming apparatus 101 executes a print job in a state where the setting of discharge tray switching by the specified number of sheets is enabled. The processing in Fig. 8 is executed by the CPU 222 of the printing apparatus 107.

In step S801, the printing apparatus 107 receives a print job from the external controller 102. In step S802, the CPU 222 accesses the HDD 221 to acquire the number of sheets for discharge tray switching set by the user. In step S803, the CPU 222 acquires the stackable number of sheets for each discharge tray of the finisher 111 from the HDD 221. According to the present embodiment, the HDD 221 of the printing apparatus 107 stores the stackable number of sheets for each tray. Alternatively, the CPU 222 can store the upper limit of the stackable height for each tray in the HDD 221, and calculate the stackable number of sheets according to the paper type to be used in the print job.

In step S804, the CPU 222 acquires the discharge tray setting values set by the user in the screen 700, from the HDD 221.

In step S805, the CPU 222 refers to the settings acquired in step S804 to determine the tray having the highest sheet discharge priority as a discharge destination candidate. In step S806, the CPU 222 checks whether the discharge tray set as a discharge destination candidate set in step S805 is loaded with paper. the CPU 222 determines that the relevant tray is loaded with paper (YES in step S806), the processing returns to step S805. In step S805, the CPU 222 sets the tray having the second highest sheet discharge priority as a discharge destination candidate. In a case where the CPU 222 determines that the tray having the lowest sheet discharge priority is loaded with paper, the CPU 222 then sets, in step S805, the tray having the highest sheet discharge priority as a discharge destination candidate.

In a case where the CPU 222 determines that the tray of the discharge destination candidate is loaded with no paper (NO in step S806), the processing proceeds to step S807. In step S807, the CPU 222 determines the relevant tray as a discharge destination tray.

In step S808, the CPU 222 compares the number of sheets for discharge tray switching acquired in step S802 with the stackable number of sheets of the relevant tray determined in step S807. In a case where the number of sheets for discharge tray switching exceeds the stackable number of sheets of the tray (YES in step S808), the processing proceeds to step S809. In step S809, the CPU 222 sets the relevant tray as an undischargeable tray and stores the setting in the memory 223. The processing then returns to step S805. In step S805, the CPU 222 changes the discharge destination tray.

In a case where the number of sheets for discharge tray switching is equal to or less than the stackable number of sheets of the relevant tray (NO in step S808), the processing proceeds to step S810. In step S810, the CPU 222 executes print processing. In step S811, the CPU 222 discharges sheets to the tray determined in step S807. In step S812, the CPU 222 checks whether the number of sheets having been discharged to the relevant tray has reached the number of sheets for discharge tray switching.

In a case where the relevant number of sheets has reached the number of sheets for discharge tray switching (YES in step S812), the processing returns to step S805. In step S805, the CPU 222 changes the discharge destination tray. In a case where the relevant number of sheets has not reached the number of sheets for discharge tray switching (NO in step S812), the processing proceeds to step S813. In step S813, the CPU 222 determines whether the print job has been completed.

In a case where the CPU 222 determines that the print job has not completed (NO in step S813), the processing returns to step S810. In step S810, the CPU 222 continues the print processing. In a case where the CPU 222 determines that the print job is completed (YES in step S813), the CPU 222 ends the print processing.

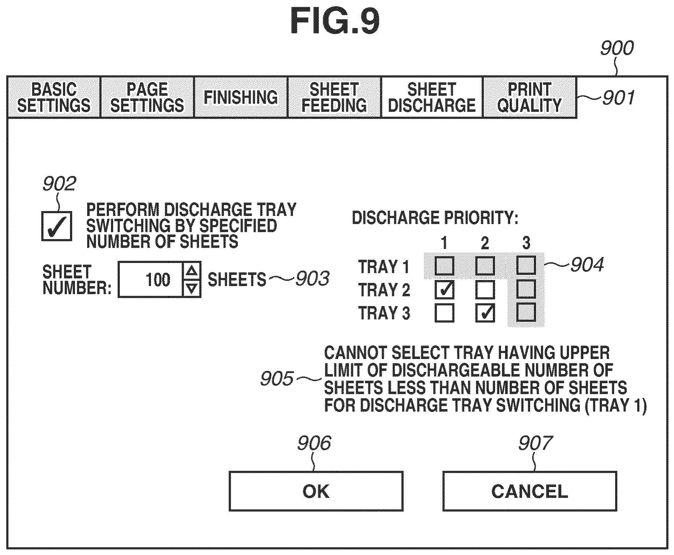

Fig. 9 illustrates an example of a sheet discharge setting screen for the printer driver installed in the PC 103 according to a different embodiment. A setting screen 900 is displayed on the display 205 of the PC 103. When the user inputs a print job from the printer driver, the user makes setting for the print job from the setting screen 900. Tabs 901 are used to select setting items. To set discharge trays, the user selects a "Sheet Discharge" tab. A check box 902 is used to enable the tray switching function by the specified number of sheets. To enable the relevant function, this check box is checked. A check box 903 is used to input the number of sheets for discharge tray switching related to the tray switching function by the specified number of sheets. The user is allowed to input the number when a check box 904 is checked. Check boxes 904 are used to set the priority for different discharge trays.

The priority of each discharge tray can be set by checking each check box. When the number of sheets for discharge tray switching of the pull-down box 903 is input, the check boxes of the trays having the upper limit of the dischargeable number of sheets less than the number of sheets of the pull-down box 903 are displayed in a gray-out state, disabling a user input. Referring to the example in Fig. 9, the check boxes of the tray 1 are displayed in a gray-out state, and the selectable tray number is decremented by one. Thus, the check boxes of priority 3 are also displayed in a gray-out state. When such gray-out processing is performed, the upper limit of the dischargeable number of sheets of the relevant tray is less than the number of sheets input to the pull-down box 903, and thus the CPU 222 displays a message 905 to indicate that the relevant tray cannot be selected. Upon completion of setting, the user presses an OK button 906 or a cancel button 907 to store or cancel the setting values, respectively.

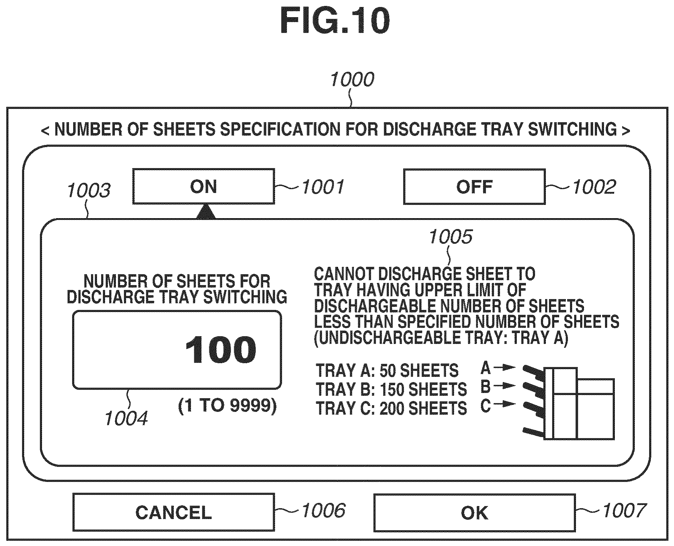

Fig. 10 illustrates an example of a setting screen for the discharge tray switching function by the specified number of sheets. A setting screen 1000 is displayed on the display 225. The user makes settings for the discharge tray switching function by the specified number of sheets from the setting screen 1000. When the user presses an ON button 1001, the relevant function is enabled. When the user presses an OFF button 1002, the relevant function is disabled. When the ON button 1001 is pressed, a box 1003 for accepting an input of the specified number of sheets appears, allowing the user to specify the number of sheets. A box 1004 displays the number of sheets input by the user from the operation unit 224. The user is allowed to specify the number of sheets with a number from 1 to 9999. Referring to the example in Fig. 10, the user specifies 100 sheets. When the printing apparatus 107 has discharged 100 sheets to a discharge tray of the finisher 111, the printing apparatus 107 changes the discharge destination tray to another discharge tray.

A message 1005 appears when the number of sheets input in the box 1004 exceeds the upper limit of the stackable number of sheets of any one tray of the finisher 111. Referring to the example in Fig. 10, the number of sheets (100 sheets) input in the box 1004 exceeds the upper limit of the stackable number of sheets (50 sheets) for the tray A. Thus, a warning appears to indicate that no more sheets can be discharged to the tray A.

When the user presses an OK button 1007, the setting values in the setting screen 1000 are reflected to the print job. When the user presses a cancel button 1006, the CPU 222 closes the setting screen 1000 and terminates the setting processing.

The present disclosure makes it possible to prevent bundles of user-specified number of sheets from being separately discharged to a plurality of discharge trays by the discharge tray switching function by the specified number of sheets.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus comprising:
printing means;
a plurality of discharge trays including a first discharge tray, a second discharge tray, and a third discharge tray, each of the plurality of discharge trays being configured to receive a sheet with an image printed thereon discharged by the printing means;
accepting means for accepting a specified number of sheets by a user; and
switching means for switching a discharge tray to which the sheet is discharged for each of the specified number of sheets,
wherein the switching means does not switch to the first discharge tray having a number of dischargeable sheets that is less than the specified number of sheets, and switches the discharge tray to which the sheet is discharged for each of the specified number of sheets to one of the second discharge tray and the third discharge tray having a dischargeable number of sheets that is larger than or equal to the specified number of sheets among the plurality of discharge trays.

2. The image forming apparatus according to claim 1, further comprising display means for displaying a screen for accepting a selection of a discharge tray,
wherein the switching means switches the discharge destination tray to which the sheet is discharged for each specified number of sheets, the discharge tray being selected in the screen, and
wherein, in the screen, the first discharge tray having the dischargeable number of sheets that is less than the specified number of sheets cannot be selected.

3. The image forming apparatus according to claim 2, wherein the screen displays information indicating that a discharge tray having the dischargeable number of sheets less than the specified number of sheets cannot be selected.

4. The image forming apparatus according to claim 3, wherein the information is a message.

5. The image forming apparatus according to claim 1,
wherein the accepting means accepts settings of priorities of the discharge trays, and
wherein the switching means changes the discharge tray based on the priorities.

6. The image forming apparatus according to claim 5, wherein the priorities are set for each executable function of the image forming apparatus.

7. The image forming apparatus according to claim 1, wherein the number of dischargeable sheets refers to a number of sheets that can be discharged without removing discharged sheets.

8. The image forming apparatus according to claim 1, wherein the number of dischargeable sheets refers to a number of sheets set as an upper limit value.

9. A method for controlling an image forming apparatus having printing means, and a plurality of discharge trays including a first discharge tray, a second discharge tray, and a third discharge tray, each of the plurality of discharge trays being configured to receive a sheet with an image printed thereon discharged by the printing means, the method comprising:
accepting a specified number of sheets by a user; and
switching a discharge tray to which the sheet is discharged for each of the specified number of sheets,
wherein the switching does not switch to the first discharge tray having a number of dischargeable sheets that is less than the specified number of sheets, and switches the discharge tray to which the sheet is discharged for each of the specified number of sheets to one of the second discharge tray and the third discharge tray having a dischargeable number of sheets that is larger than or equal to the specified number of sheets among the plurality of discharge trays.

10. A program for causing a computer to execute each means of the image forming apparatus according to any one of claims 1 to 8.
